# EUROPEAN PATENT SPECIFICATION

(11) **EP 3 913 210 B1**
(45) Date of publication and mention of the grant of the patent: **15.05.2024**
(21) Application number: 21174430.5
(22) Date of filing: 18.05.2021
(51) Int. Cl.: F02M 21/02, F01M 3/02, F01M 11/08, F02B 43/00, F02D 19/02, F02M 63/00, B01D 46/00

(54) **GASEOUS FUEL DELIVERY SYSTEM FOR AN INTERNAL COMBUSTION ENGINE**
GASFÖRMIGES KRAFTSTOFFFÖRDERSYSTEM FÜR EINEN VERBRENNUNGSMOTOR
SYSTÈME D'ALIMENTATION EN CARBURANT GAZEUX POUR UN MOTEUR À COMBUSTION INTERNE

(30) Priority: 18.05.2020 GB 202007302
(43) Date of publication of application: 24.11.2021
(73) Proprietor: Delphi Automotive Systems Luxembourg SA, 4940 Bascharage (LU)
(72) Inventor: KUBIS, Ruediger, 54329 Konz (DE)
(74) Representative: Office Freylinger

(56) References cited:
- WO-A1-97/47872
- WO-A1-2018/158345
- CA-A1- 2 359 857
- US-A1- 2015 000 638
- US-A1- 2018 023 516
- US-A1- 2019 211 720
- US-A1- 2019 211 779
- US-B2- 9 429 108

## Description

### FIELD OF THE INVENTION

The present invention generally relates to internal combustion engines and more particularly to a gaseous fuel delivery system for injection of gaseous fuel into such engine.

### BACKGROUND OF THE INVENTION

Currently, over 20% of global demand for energy is related to the transport sector which, to a significant extent, has been dominated by internal combustion engines, which can be operated using a wide range of fuels. In the past decades, there has been a significant increase in interest in gaseous fuels, such as compressed natural gas. But the need for alternative fuels has been growing in importance recently. This is connected not only with decreasing fossil fuel resources, but also with the growing concern for the natural environment and the fight against global warming.

Indeed, the main advantage of using natural gaseous fuel instead of gasoline or diesel is a cleaner combustion process. In the case of compressed gases this is because, on the one hand compressed gases are already present in a homogenous gaseous form in the combustion chamber and not in an atomized form like gasoline and diesel, and on the other hand the molecule chains forming the compressed gases contain only approximately half as many carbon atoms with respect to the hydrogen atoms as those forming gasoline or diesel. Thus when combustion with oxygen occurs, more water and less carbon dioxide and soot are produced.

However, compressed or liquefied gases are relatively dry fuels, lacking lubricating compounds compared to gasoline or diesel. The service life and operational reliability of fuel injectors used with gaseous fuels are therefore limited. The lack of lubrication is even more problematic for fuel injectors mounted for direct fuel injection, as they face higher temperatures, resulting in excessive wear, mainly at the pintle/seat interface of the injector nozzle.

In practice, in an incidental manner, the compressed natural gas may contain a certain amount of lubricant, as oil can leak from the compressor compressing the natural gas during refueling, and be carried away by and added to the gaseous fuel. The amount of added oil may be sufficient to permit an acceptable level of lubrication of the injector, but this does not represent a viable solution. Indeed, the amount of added oil is unpredictable, uncontrollable and difficult to measure. It is considered to vary between 0 and 200 ppm, so between insufficient and excessive amounts. It is therefore not possible to rely solely on incidental fuel lubrication to solve the problem of fuel injector lubrication in gaseous fuel supplied engines.

The above problem is addressed by US 2019/0211720 A1, which proposes injecting lubricant into the gaseous fuel supply line upstream of the fuel injectors. The lubricant is stored in a dedicated tank coupled to the fuel supply duct through a metering valve. A control unit operates the metering valve to regulate the amount of lubricant injected into the gaseous fuel based on engine operating conditions.

A shortcoming of this approach is however that the amount of lubricant injected into the gaseous fuel fed to the engine is controlled depending on the engine operating conditions, regardless of the incidental amounts compressor oil that may be potentially present, thus likely resulting in injector over-lubrication, which is also undesirable for injector reliability (sticking problems at cold start, etc.).

US 2019/211779 discloses a CNG fuel delivery system with a special design of the fuel rail, which comprises two volumes separated by a porous wall, the amount of oil injected depending of the pressure difference between the two volumes.

US 2018/023516 disclose a bi-fuel engine where gaseous fuel is compressed in a scroll compressor, from which a mixture of pressurized gas and oil is obtained. The mixture is then gas fed to an oil separator, wherein the oil is separated from the compressed natural gas, such that compressed natural gas is delivered to the engine substantially free from oil.

### OBJECT OF THE INVENTION

The object of the present invention is therefore to provide an improved gaseous fuel delivery system without the aforementioned drawbacks.

This object is achieved by a gaseous fuel delivery system as claimed in claim 1.

### SUMMARY OF THE INVENTION

According to the present invention, a gaseous fuel delivery system for a gaseous fuel internal combustion engine comprises:
- a fuel tank;
- a gaseous fuel supply line connecting the fuel tank to a fuel rail delivering gaseous fuel to fuel injectors in the engine;
- a pressure regulator arranged in the gaseous fuel supply line;

It shall be appreciated that the gaseous fuel delivery system further comprises:
- a lubricating device arranged in the gaseous fuel supply line downstream of the pressure regulator and configured to selectively introduce lubricant into the flow of gaseous fuel circulating in the gaseous fuel supply line towards the engine; and
- a filtering device arranged in the fuel supply line, the filtering device being configured to remove, from the flow of gaseous fuel passing there through, lubricant quantities exceeding a predetermined threshold.

The present invention provides a gaseous fuel delivery system that allows introducing lubricant into the gaseous fuel in the fuel supply line to the engine, in order to ensure that a certain level of lubricant is present in the fuel reaching the injectors. The invention permits to avoid issues of missing lubrication at fuel injectors, but also allows accurately controlling the lubricant content in the gaseous fuel to avoid over-lubrication of fuel injectors. This is possible due to the combination of the lubricating device with the filtering device, a solution that permits addressing incidental oil amounts present in the gaseous fuel. As used herein, the term 'incidental' is used to designate oil present in the gaseous fuel but not added by means of the lubricating device (e.g. compressor oil having leaked during the filling process).

According to one embodiment, the filtering device is arranged in the fuel supply line before (i.e. upstream) the lubricating device. The idea here is to use a filter to remove all of the oil content in the gaseous fuel flow passing through the filter. A precise and known amount of lubricant can then be introduced into the fuel flows by means of the lubrication device. In this embodiment, the filtering device is preferably arranged on the low pressure side, i.e. between the lubricating device and the pressure regulator, and is thus configured to filter out essential all of the potential oil content. The filter threshold is thus about zero, or say in the range of 0 to 5, or 0 to 10 ppm.

According to another embodiment, the filtering device is arranged downstream of the lubricating device. In operation, the lubricating device selectively introduces predetermined amounts of lubricant into the flow of gaseous fuel. This is done regardless of the oil concentration possibly already in the fuel. The predetermined amount of lubricant is advantageously set to be sufficient to ensure a proper lubrication of fuel injectors, even where the gaseous fuel flowing from the tank does not contain any oil. The lack of lubrication is therefore avoided. The filtering device is here arranged on the flow of the gaseous flow in the fuel supply line and configured to remove lubricant quantities in the gaseous fuel flow in excess of a predetermined threshold. The amount of lubricant stripped off by the filter then depends on the oil concentration already present in the gaseous fuel (in the tank). Downstream of the filtering device, the lubricant concentration in the fuel flow is thus at maximum the predetermined threshold.

In summary, thanks to the present invention, lubricant content in the gaseous fuel flow is accurately known and controlled, while over-lubrication of injectors is avoided.

The invention reduces the complexity of the gaseous fuel delivery system to a minimum and guaranties a "well known" oil concentration in the gaseous flow, meaning adding oil where needed and removing oil which is potentially in the gas and not healthy for the injectors.

The lubricating device is preferably independent from the engine. Accordingly, lubricating device may comprise a lubricant reservoir storing lubricant therein.

In embodiments, the lubricating device comprises a lubricant metering valve and a pressure device. Lubricant is fed from the lubricant reservoir to the pressure device, which in turn is configured to build up pressure so that the lubricant can be introduced at a predetermined pressure into the fuel supply line by actuation of the lubricant metering valve. In general, the pressure device is configured so that the injection pressure of the lubricant into the gas supply line is greater than the fuel pressure in the supply line.

It may be noted here that since the lubricating device is arranged downstream of the pressure regulator, the pressure needed to introduce the lubricant into the fuel supply line is much less, as compared to the situation where lubricant should be introduced upstream of the pressure regulator.

The pressure device may comprise a mechanical pump arranged to suck in lubricant from the lubricant reservoir and output pressurized lubricant towards the metering valve. The pressure device may be based on any appropriate high pressure pump technology capable to generate the required differential pressure, using e.g. gear pumps, rotary vane pumps, radial piston pumps etc. In that case only a pump with very low leak rates can do the job. It is desirable that the pump is able to work at low flow rates and and has low leakage rates.

Alternatively, the pressure device may be designed to use the tank pressure upstream the pressure regulator to supply the lubricating device, hence acting as a pump instead of using a mechanical pump. The idea here is to exploit the pressure differential existing between the upstream and downstream sides of the pressure regulator. In practice, a differential pressure between regulator inlet and outlet side of at least 3 to 4 bar is required for proper operation. This differential gas pressure which is always present and needed for the function of a CNG injection system, would be sufficient already to achieve the oil flow needed to get the oil into the gas system under all conditions. The pressure system may thus, instead of using a mechanical pump, use a system, where a member (e.g. a piston) is subject to the fuel pressure upstream of the pressure regulator.

In practice, the gaseous fuel pressure downstream of the pressure regulator may be in the range from between 3 to 20, and up to 40 bars. During engine operation, the pressure on the low pressure side, i.e. the nominal fuel pressure, is adapted depending on the engine operating point. A low nominal pressure is used for low engine load conditions and operating points. Higher nominal pressures are required to achieve the requested maximum gas flow to achieve the target engine performance. As indicated above, the lubricant is preferably pressurized at a pressure superior to that in the low pressure side, by at least 3 or 4 bars. This whether a mechanical pump is used or the pressure differential as explained above.

In the context of the invention, the lubricant is a fluid, in particular oil. Any appropriate oil can be used, for example engine oil, in particular of the type already present in the engine, or standard compressor oil used in CNG gas stations.

In embodiments, the system comprises a drain line arranged to drain out lubricant collected by the filtering device. This is a common feature for expelling the fluid collected by a filter.

Advantageously, the drain line is connected to the lubricant reservoir in order to recycle collected lubricant.

The operation of the lubrication device may be controlled such that, the amount of lubricant injected by the lubricating device is substantially equal to the predetermined threshold of the filtering device. In doing so, it is made sure that a desired minimum lubricant amount is present. Should the fuel already contain an amount of incidental oil, it will be stripped off at the filtering device. The lubricant concentration downstream of the filtering device is thus fixed at a constant value (corresponding to the filter threshold).

A control unit is preferably configured to regulate the amount of injected lubricant based on the gaseous fuel flow rate, respectively on engine load or speed. The conventional engine control unit (ECU) can be programmed for controlling the lubrication device. Classically, the ECU will adapt the fuel quantity based on the user demand, which also implies adapting the gaseous fuel pressure downstream of the pressure regulator, and hence modifying the gaseous fuel flow rate.

The control unit may be configured to introduce, via the lubrication device, lubricant amounts to achieve an additional lubricant concentration of between 15 to 50 ppm, preferably 15 to 30 ppm, more preferably about 20 ppm. These exemplary values are considered for CNG, E-methane or gases with similar densities. They will be adapted by those skilled in the art for less dense fuels such as e.g. H₂. The term 'additional' is used to designate the lubricant concentration added by actuating the lubrication device, since the fuel flow may already contain an incidental lubricant amount.

The present invention has been developed for internal combustion engines running on gaseous fuels, i.e. engines where the fuel is fed to the fuel rail and fuel injectors in the gaseous state, as opposed to engines where the fuel is supplied in liquid state (diesel and gasoline engines, etc.). The fuel injectors can be arranged for port injection or in direct, in-cylinder injection.

The invention is applicable to any kind of gaseous fuel, natural or resulting from synthesis, for example natural gas, methane, e-methane, hydrogen (H₂), etc. In some cases, the gaseous fuel may be stored in the fuel tank in partly liquid form.

According to another aspect, the invention also relates to an internal combustion engine comprising a plurality of cylinders and a gaseous fuel delivery system as disclosed herein, wherein the fuel rail is connected to fuel injectors mounted in the engine for direct fuel injection.

### BRIEF DESCRIPTION OF THE DRAWINGS

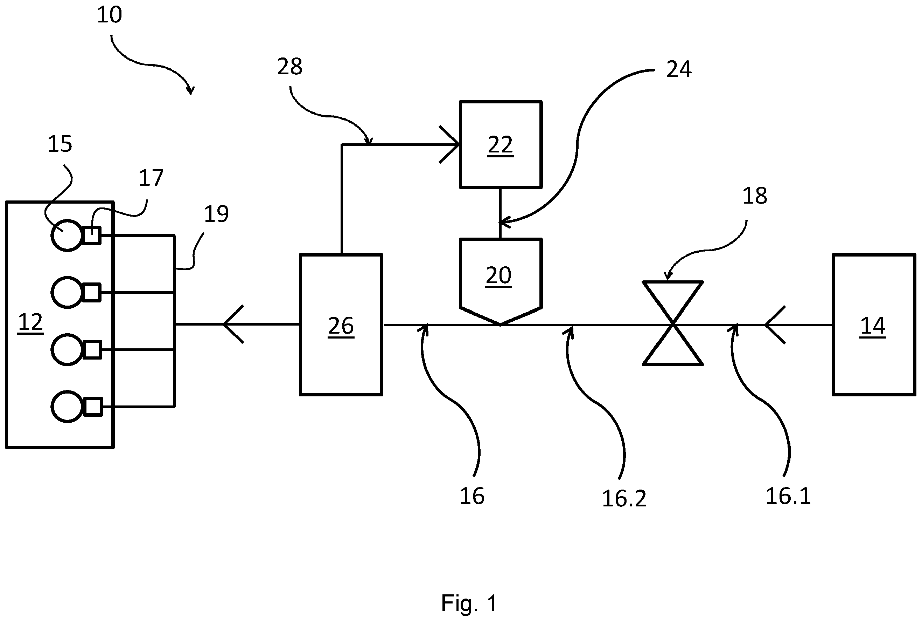

The present invention will now be described, by way of example, with reference to the accompanying drawing, which is a functional diagram of an embodiment of the present gaseous fuel delivery system.

### DETAILED DESCRIPTION OF PREFERRED EMBODIMENTS

The unique figure schematically shows an embodiment of the inventive gaseous fuel delivery system 10 for use in an internal combustion engine.

The present fuel delivery system 10 is designed to be used with an internal combustion engine operated with gaseous fuel, such as, e.g. compressed natural gas, methane or H₂. In the context of the present invention, the term 'fuel' is also used alone, but still refers to gaseous fuel.

The gaseous fuel is stored in a fuel tank 14 and flows to engine 12 through a fuel supply line 16. A pressure regulator 18 is arranged in the supply line 16 between the fuel tank 14 and the combustion engine 12.

Fuel tank 14 is a high pressure recipient adapted for the storage of gaseous fuels at high pressures, commonly up to several hundred bars, as known in the art. During operation of the engine 12, and due to consumption of the stored fuel, fuel pressure inside the fuel tank 14 will drop. The pressure regulator 18 delivers a flow of gaseous fuel at a reduced, controlled pressure, which may be commonly between about 3 to 40 bars. The pressure regulator 18 thus divides the fuel supply line 16 into an upstream, high pressure section 16.1, where the fuel circulates at the pressure of the fuel tank 14, and a downstream, low pressure side 16.2, through which the fuel flows at the pressure set by regulator 18. In this context, low pressure should be understood as low compared to the pressure of the gaseous fuel inside the fuel tank 14, but can be as high as 40 bars, and corresponds to the operating or nominal gaseous fuel pressure for supply to the engine 12.

At the engine interface, the fuel line 16 comprises a fuel rail 19 that supplies gaseous fuel to the fuel injectors. In the shown embodiment, the engine 12 comprises four cylinders 15. One fuel injector 17 is mounted in the cylinder head for each engine cylinder 15, in order to inject fuel directly into the respective combustion chambers.

Furthermore, a lubricating device 20 and a filtering device 26 are also arranged in the supply line 16, on the low pressure side 16.2, i.e. downstream of the pressure regulator 18 with respect to fuel flow. The filtering device 26 is arranged downstream of the lubricating device 20.

The lubricating device 20 is designed to permit selective introduction (or injection) of predetermined amounts of lubricant into the gaseous fuel flow. For the purpose of injector nozzle lubrication, any appropriate lubricants may be used, in particular oils, e.g. standard engine oil similar to that already present in the engine (depending on engine type and size). In this context, the lubricating device 20 may also be referred to as oiling device; both terms will be used hereinafter.

In the present embodiment, the oiling device 20 includes a lubricant metering valve and a pressure device configured to introduce oil stored in an oil reservoir 22 into the gaseous fuel flow. The oil reservoir is fluidly coupled to the oiling device 20 through an oil feed pipe 24. The pressure device here includes a mechanical pump, e.g. a gear pump, rotary vane pump, or radial piston pump.

Lubricant (liquid oil) may be stored in the lubricant reservoir 22 at atmospheric pressure and the pressure device permits pressurizing the upstream of the metering valve. The pressure of lubricant in the metering valve is preferably higher than that of the fuel in the low pressure line section 16.2. Whereas the lubricant is pressurized to a pressure above the nominal fuel pressure in the supply line, the lubricant pressurization depends on application and required gas flow rate. The maximum CNG pressure during operation defines the need for the oil pressure level.

An engine control unit (ECU - not shown) is further operatively connected to a number of sensors and actuators for controlling and monitoring engine operation, as it is known in the art. The ECU may be a conventional microcomputer including: microprocessor unit, input/output ports, read-only memory, random access memory, and a conventional data bus. ECU is conveniently configured to receive various signals from sensors coupled to the internal combustion engine 12 and send command signals to actuators in components in the vehicle, such as a throttle (not shown), fuel injectors 17, etc. Additionally, the ECU is also configured to receive pedal position (PP) from a pedal position sensor coupled to a pedal actuated by an operator.

Here, the ECU is further configured to control the lubricating device 20 by regulating the amount of lubricant delivered via the lubricant metering valve into supply line 16 based on one or more engine operating conditions. In general, the ECU commands the various actuators to reach a desired engine performance, depending on user demand, and as reflected by parameters such as engine speed and/or load. The gaseous fuel flow also depends on speed/load and is regulated by the ECU, which adapts the fuel pressure in the low pressure side.

In this context, it may thus be noted that the flow of gaseous fuel (flow rate or pressure) can be used as main input for the required lubricant quantity, in order to achieve a target oil concentration / ratio. As used herein, the addition of oil is expressed as ppm, because the lubricating device is controlled to injected predetermined volumes of oil per time periods, and the flow of gaseous fuel (pressure) over the same time period is also known.

Additionally, the ECU may be configured to further control the pressure device to regulate the pressure of the injected oil based on the effective pressure of the gaseous fuel downstream of the pressure regulator 18.

The filtering device 26 is designed to retain (strip off) from the flow of gaseous fuel towards the engine, lubricant quantities exceeding a predetermined threshold. This threshold is determined (e.g. by calibration) so that an appropriate amount of oil arrives at the injectors, to ensure reliable operation of the injector, but not excessive lubrication. The filtering device 26 may include a simple filter, e.g. a metallic mesh sized to allow passage of a predetermined amount of lubricant, hence retaining oil in excess of the design threshold. For example, standard filters such as the ones used in compressed air installations can be employed. For standard fuel injectors designed for gaseous fuel applications the filter threshold may be set to achieve a lubricant concentration (downstream of the filter) in the range between 15 and 50 ppm, such as e.g. 20 ppm. These are exemplary values of non-limiting embodiments; those skilled in the art will adapt / define an admissible threshold depending on the lubrication need of the combustion engine and the lubricant introduced by the lubricating device.

In practice, the ECU may control the oiling device 20 such that the amount of lubricant introduced into the gaseous fuel is above the set filter threshold of the filtering device 26. The lubricant level downstream of the filtering device 26 can thus be maintained constant, regardless of the incidental lubricant concentration already in the fuel (stored in fuel tank). Indeed, even if there is compressor oil in the gas tank of the vehicle, it seems to be almost impossible to predict how much of this oil (and in which state - droplets, mist, diluted?) will finally reach the fuel supply system.

The filtering device 26 is advantageously connected to a drain line 28 provided to drain the oil collected on the filter. This prevents clogging and provides for constant performances of the filtering device 26 over time. In this embodiment, the drain line 28 forms a recycling loop connecting the filtering device 26 and the oil tank 22, whereby collected, excess oil can be channeled back to the oil tank 22. Recycled drained oil can thus be used again and reintroduced into the gaseous fuel.

An embodiment of the inventive gaseous fuel delivery system 10 having been presented in detailed, let us now describe its operating principle.

As explained before, the gaseous fuel stored in the fuel tank 14 may contain an incidental amount of oil due to the filling process, which may commonly be in the range of 0 and 200 ppm. Regardless of the incidental oil content, the oiling device 20 is controlled to selectively introduce pre-determined amounts of oil into the gaseous fuel on the downstream side of the fuel line 16. The amount of oil added may be controlled to achieve an oil content of about 20 ppm in the gaseous flow stream towards the engine. The filter threshold values will typically be adapted depending on the gaseous fuel type (mainly in view of density).

Let us take the following example, where the oiling device 20 is configured to introduce 20 ppm of lubricant into the gaseous fuel. Lubricant-added gaseous fuel then flows through the fuel supply line to the filtering device 26. The filter threshold of the filtering device is set to reach a lubricant concentration of 20 ppm downstream of the filtering device.

When the compressor oil content in the gaseous fuel from the tank initially equals 0 ppm, the lubricant added by the lubricant device 20 is 20 ppm, so that the total lubricant amount arriving at the filtering device 26 is 20 ppm. In this case, the entirety of the lubricant can flow through the filtering device 26, there is no excess lubricant to be retained. But when the compressor oil content (i.e. incidental oil) in the fuel initially equals, say, 100 ppm, and where 20 ppm of lubricant is introduced into the fuel flow by the lubricating device 20, then the total amount arriving at the filtering device is 120 ppm and the latter will retain 100 ppm of oil.

In both cases, the gaseous fuel arriving at the combustion engine 12 will contain 20 ppm of lubricant, allowing for a proper lubrication of the fuel injector nozzles. It may be noted that the filter accuracy or performance can be average, some deviations from this value is considered to be acceptable without measurable increase in particulate emissions.

## Claims

1. A gaseous fuel delivery system (10) for a gaseous fuel internal combustion engine (12), said system comprising:
a fuel tank (14);
a gaseous fuel supply line (16) connecting said fuel tank to a fuel rail (19) delivering gaseous fuel to fuel injectors (17);
a pressure regulator (18) arranged in the gaseous fuel supply line (16);
a lubricating device (20) arranged in said gaseous fuel supply line (16) downstream of said pressure regulator (18) and configured to selectively introduce lubricant into the flow of gaseous fuel in said gaseous fuel supply line (16); and
a filtering device (26) arranged in said fuel supply line (16), said filtering device being configured to remove, from the flow of gaseous fuel passing therethrough, lubricant quantities exceeding a predetermined threshold.

2. The system according to claim 1, wherein said filtering device (26) is arranged in said fuel supply line (16) between said lubricating device (20) and said pressure regulator (18) and is configured to filter out essential all of the potential oil content.

3. The system according to claim 1, wherein said filtering device (26) is arranged in said fuel supply line (16) downstream of said lubricating device (20).

4. The system according to claim 1, 2 or 3, wherein said lubricating device (20) comprises a lubricant reservoir (22) storing lubricant therein.

5. The system according to claim 4, wherein said lubricating device comprises a lubricant metering valve and a pressure device, the pressure device being supplied with lubricant from the lubricant reservoir.

6. The system according to claim 5, wherein said lubricant is pressurized by said pressure device up to a pressure adapted for introduction of said lubricant into the flow of gaseous fuel in said fuel supply line.

7. The system according to any one of the preceding claims, wherein the gaseous fuel pressure downstream of said pressure regulator is between 3 and 40 bars, and lubricant is pressurized at a pressure higher than that in said fuel supply line.

8. The system according to any one of the preceding claims, wherein said lubricant is a fluid lubricant, in particular engine oil or compressor oil.

9. The system according to any one of the preceding claims, further comprising a drain line arranged to drain out lubricant collected by the filtering device.

10. The system according to claim 9 when dependent on claim 4, wherein said drain line is connected to said lubricant reservoir in order to recycle collected lubricant.

11. The system according to any one of claim 2 to 10, wherein the amount of lubricant injected by the lubricating device substantially corresponds to said predetermined threshold.

12. The system according to any one of the preceding claims, further comprising a control unit, said control unit being configured to regulate the amount of injected lubricant based on the gaseous fuel flow rate, respectively on engine load or speed.

13. The system according to claim 12, wherein said control unit is configured to inject lubricant amounts to achieve an additional lubricant concentration of between 15 to 50 ppm, preferably 15 to 30 ppm, more preferably about 20 ppm.

14. The system according to any one of the preceding claims, wherein said filtering device comprises a metal mesh.

15. The system according to any one of the preceding claims, wherein said gaseous fuel is one of natural gas, methane, e-methane, hydrogen.

16. An internal combustion engine comprising a plurality of cylinders and a gaseous fuel delivery system according to anyone of the preceding claims, wherein said fuel rail is connected to fuel injectors mounted in said engine for direct fuel injection.

## Patentansprüche

1. System (10) zur Zufuhr von gasförmigem Kraftstoff für einen Verbrennungsmotor (12) mit gasförmigem Kraftstoff, wobei das System umfasst:
einen Kraftstoffbehälter (14);
eine Zufuhrleitung (16) für gasförmigen Kraftstoff, die den Kraftstoffbehälter mit einer Kraftstoffschiene (19) verbindet, die gasförmigen Kraftstoff an Kraftstoffeinspritzdüsen (17) liefert;
einen Druckregler (18), der in der Zufuhrleitung (16) für gasförmigen Kraftstoff angeordnet ist;
eine Schmiervorrichtung (20), die in der Zufuhrleitung (16) für gasförmigen Kraftstoff stromabwärts des Druckreglers (18) angeordnet und so konfiguriert ist, dass sie selektiv Schmiermittel in den Strom des gasförmigen Kraftstoffs in der Zufuhrleitung (16) für gasförmigen Kraftstoff einführt; und
eine Filtervorrichtung (26), die in der Kraftstoffzufuhrleitung (16) angeordnet ist, wobei die Filtervorrichtung so konfiguriert ist, dass sie aus dem Strom des gasförmigen Kraftstoffs, der durch sie hindurchgeht, Schmiermittelmengen entfernt, die einen vorgegebenen Schwellenwert überschreiten.

2. System nach Anspruch 1, wobei die Filtervorrichtung (26) in der Kraftstoffzufuhrleitung (16) zwischen der Schmiervorrichtung (20) und dem Druckregler (18) angeordnet und so konfiguriert ist, dass sie im Wesentlichen den gesamten potenziellen Ölgehalt herausfiltert.

3. System nach Anspruch 1, wobei die Filtervorrichtung (26) in der Kraftstoffzufuhrleitung (16) stromabwärts der Schmiereinrichtung (20) angeordnet ist.

4. System nach Anspruch 1, 2 oder 3, wobei die Schmiervorrichtung (20) einen Schmiermittelvorratsbehälter (22) umfasst, in dem Schmiermittel aufbewahrt ist.

5. System nach Anspruch 4, wobei die Schmiervorrichtung ein Schmiermittel-Dosierventil und eine Druckvorrichtung umfasst, wobei die Druckvorrichtung mit Schmiermittel aus dem Schmiermittelvorratsbehälter versorgt wird.

6. System nach Anspruch 5, wobei das Schmiermittel durch die Druckvorrichtung auf einen Druck gebracht wird, der für die Einleitung des Schmiermittels in den Strom des gasförmigen Kraftstoffs in der Kraftstoffzufuhrleitung geeignet ist.

7. System nach einem der vorhergehenden Ansprüche, wobei der Druck des gasförmigen Kraftstoffs stromabwärts des Druckreglers zwischen 3 und 40 bar beträgt und das Schmiermittel mit einem Druck beaufschlagt wird, der höher ist als der Druck in der Kraftstoffzufuhrleitung.

8. System nach einem der vorhergehenden Ansprüche, wobei das Schmiermittel ein flüssiges Schmiermittel, insbesondere Motoröl oder Kompressoröl ist.

9. System nach einem der vorhergehenden Ansprüche, das ferner eine Ablassleitung umfasst, die zum Ablassen des von der Filtervorrichtung gesammelten Schmiermittels angeordnet ist.

10. System nach Anspruch 9 in Abhängigkeit von Anspruch 4, wobei die Ablassleitung mit dem Schmiermittelbehälter verbunden ist, um gesammeltes Schmiermittel zu recyceln.

11. System nach einem der Ansprüche 2 bis 10, wobei die von der Schmiervorrichtung eingespritzte Schmiermittelmenge im Wesentlichen dem vorgegebenen Schwellenwert entspricht.

12. System nach einem der vorhergehenden Ansprüche, das ferner eine Steuereinheit umfasst, wobei die Steuereinheit so konfiguriert ist, dass sie die Menge des eingespritzten Schmiermittels auf der Grundlage des Durchsatzes des gasförmigen Kraftstoffs bzw. der Motorlast oder -drehzahl regelt.

13. System nach Anspruch 12, wobei die Steuereinheit so konfiguriert ist, dass sie Schmiermittelmengen einspritzt, um eine zusätzliche Schmiermittelkonzentration von 15 bis 50 ppm, vorzugsweise 15 bis 30 ppm, besonders bevorzugt etwa 20 ppm zu erreichen.

14. System nach einem der vorhergehenden Ansprüche, wobei die Filtervorrichtung ein Metallsieb umfasst.

15. System nach einem der vorhergehenden Ansprüche, wobei es sich bei dem gasförmigen Kraftstoff um Erdgas, Methan, E-Methan oder Wasserstoff handelt.

16. Verbrennungsmotor mit einer Vielzahl von Zylindern und einem System zur Zufuhr von gasförmigem Kraftstoff nach einem der vorhergehenden Ansprüche, wobei die Kraftstoffschiene mit Kraftstoffeinspritzdüsen verbunden ist, die in dem Motor zur direkten Kraftstoffeinspritzung angebracht sind.

## Revendications

1. Système de distribution de carburant gazeux (10) pour un moteur à combustion interne à carburant gazeux (12), ledit système comprenant :
un réservoir de carburant (14) ;
une conduite d'alimentation de carburant gazeux (16) raccordant ledit réservoir de carburant à une rampe d'alimentation (19) distribuant du carburant gazeux aux injecteurs de carburant (17) ;
un régulateur de pression (18) agencé dans la conduite d'injection de carburant gazeux (16) ;
un dispositif de lubrification (20) agencé dans ladite conduite d'alimentation de carburant gazeux (16) en aval dudit régulateur de pression (18) et conçu pour introduire sélectivement du lubrifiant dans l'écoulement de carburant gazeux dans ladite conduite d'alimentation de carburant gazeux (16) ; et
un dispositif de filtration (26) agencé dans ladite conduite d'alimentation de carburant (16), ledit dispositif de filtration étant conçu pour retirer, de l'écoulement de carburant gazeux passant à travers, des quantités de lubrifiant excédant un seuil prédéterminé.

2. Système selon la revendication 1, ledit dispositif de filtration (26) étant agencé dans ladite conduite d'alimentation de carburant (16) entre ledit dispositif de lubrification (20) et ledit régulateur de pression (18) et étant conçu pour séparer par filtration essentiellement toute la teneur potentielle de pétrole.

3. Système selon la revendication 1, ledit dispositif de filtration (26) étant agencé dans ladite conduite d'alimentation de carburant (16) en aval dudit dispositif de lubrification (20).

4. Système selon la revendication 1, 2 ou 3, ledit dispositif de lubrification (20) comprenant un réservoir de lubrifiant (22) stockant du lubrifiant à l'intérieur.

5. Système selon la revendication 4, ledit dispositif de lubrification comprenant une valve de dosage de lubrifiant et un dispositif de pression, le dispositif de pression étant alimenté par un lubrifiant provenant du réservoir de lubrifiant.

6. Système selon la revendication 5, ledit lubrifiant étant placé sous pression par ledit dispositif de pression jusqu'à une pression adaptée pour l'introduction dudit lubrifiant dans l'écoulement de carburant gazeux dans ladite conduite d'alimentation de carburant.

7. Système selon l'une quelconque des revendications précédentes, la pression de carburant gazeux en aval dudit régulateur de pression étant située entre 3 et 40 bars, et le lubrifiant étant placé sous pression sous une pression supérieure à celle dans ladite conduite d'alimentation de carburant.

8. Système selon l'une quelconque des revendications précédentes, ledit lubrifiant étant un lubrifiant fluide, en particulier de l'huile moteur ou de l'huile pour compresseur.

9. Système selon l'une quelconque des revendications précédentes, comprenant en outre une conduite de drain agencée pour drainer à l'extérieur du lubrifiant collecté par le dispositif de filtration.

10. Système selon la revendication 9 lorsqu'elle dépend de la revendication 4, ladite conduite de drain étant raccordée audit réservoir de lubrifiant afin de recycler le lubrifiant collecté.

11. Système selon l'une quelconque des revendications 2 à 10, la quantité de lubrifiant injecté par le dispositif de lubrification correspondant sensiblement audit seuil prédéterminé.

12. Système selon l'une quelconque des revendications précédentes, comprenant en outre une unité de commande, ladite unité de commande étant conçue pour réguler la quantité de lubrifiant injecté sur la base du débit d'écoulement du carburant gazeux, respectivement en fonction de la charge ou de la vitesse du moteur.

13. Système selon la revendication 12, ladite unité de commande étant conçue pour injecter des quantités de lubrifiant permettant d'atteindre une concentration de lubrifiant additionnelle comprise entre 15 à 50 ppm, préférablement 15 à 30 ppm, plus préférablement d'environ 20 ppm.

14. Système selon l'une quelconque des revendications précédentes, ledit dispositif de filtration comprenant un maillage métallique.

15. Système selon l'une quelconque des revendications précédentes, ledit carburant gazeux étant l'un parmi le gaz naturel, le méthane, l'e-méthane, l'hydrogène.

16. Moteur à combustion interne comprenant une pluralité de cylindres et un système de distribution de carburant gazeux selon l'une quelconque des revendications précédentes, ladite rampe de carburant étant raccordée aux injecteurs de carburant montés dans ledit moteur pour l'injection directe de carburant.
